# EUROPEAN PATENT SPECIFICATION

(11) **EP 4 161 324 B1**
(45) Date of publication and mention of the grant of the patent: **10.12.2025**
(21) Application number: 20829385.2
(22) Date of filing: 17.12.2020
(51) Int. Cl.: A47J 31/06

(54) **BEVERAGE PREPARATION SYSTEMS AND PROCESSES, INCLUDING PORTION HOLDER WITH ENHANCED SEALING AND CLOSURE**
GETRÄNKEHERSTELLUNGSSYSTEME UND -VERFAHREN MIT PORTIONSHALTER MIT VERBESSERTER ABDICHTUNG UND VERSCHLUSS
SYSTÈMES ET PROCÉDÉS DE PRÉPARATION DE BOISSON COMPRENANT UN RÉCIPIENT DE DOSE PRÉSENTANT UNE ÉTANCHÉITÉ ET UNE FERMETURE AMÉLIORÉES

(30) Priority: 04.06.2020 PT 2020116470
(43) Date of publication of application: 12.04.2023
(73) Proprietor: WEADD, LDA, 2430-028 Marinha Grande (PT)
(72) Inventor: FREIRE FALCÃO TELES CARAMELO, Daniel, 1700-141 LISBOA (PT); QUITÉRIO GARCIA CARVALHO, Agostinho Miguel, 2400-842 LEIRIA (PT); DA SILVA GOMES JOSUE , Sonia Raquel, 2500-922 CALDAS DA RAINHA (PT)
(74) Representative: Alves Moreira, Pedro
(86) International application number: PCT/PT2020/050056
(87) International publication number: WO 2021/246888

(56) References cited:
- WO-A1-2012/001115
- WO-A1-2012/142949
- DE-A1- 102010 048 513
- DE-U1- 202016 106 830
- US-A1- 2007 186 779
- US-A1- 2013 055 904

## Description

### Field of the invention

The present invention refers to the field of beverage preparation systems and processes based upon extraction of a portion of beverage precursor substance provided in a single portion to an extraction device of a beverage preparation apparatus.

### Prior art

The prior art includes brewing devices presenting a collection space adapted for receiving a portion of beverage precursor substance, whereby said collection space is connected to a lid part by means of a swivelling connection such that the lid part can be operated in open and closed positions.

The WO 97/43939 discloses a brewing device of this type, comprising a dose-holder with a handle and defining a percolating chamber suited for holding a pre-packaged coffee dose, and a lid associated to the dose-holder in order to open and close upon the latter and thus define a second part of the percolating chamber, whereby the lid is hinged onto the dose-holder. The document discloses that there are provided means that can be manually operated to open and close the lid such as to allow the operator to open the lid with the same hand that holds the handle of the dose-holder. In particular, the lid can be actuated by a rod-button operating a leverage associated with elastic means. The elastic means can be in the form of a return spring suited recalling and keeping the lid in a closed position.

The US 5,910,205 provides a further example of such a brewing device. In this case, the brewing device comprises a brew basket that can hold ground coffee and is hinged connected to a lid above of the ground coffee that has a plurality of spaced holed provided there through to distribute water generally uniformly over said bed of ground coffee. The hinged connection of the basket with the lid member seems to be provided by a rod-like portion of the lid being swivelling retained in mutually opposing holes on a peripheral support of the basket next to the opening thereof. The brew basket includes a base and a sidewall having a plurality of fins extending generally radially on the base and further extending along the sidewall.

The WO 2014/063998 A1 discloses a brewing apparatus that is adapted so that can be operatively attached to an external part of a beverage preparation machine. Said brewing apparatus presents a container part that is connected in a swivelling connection to a lid part.

The WO 2015/132203 A1 further discloses a brewing apparatus that presents a container part connected to a lid part by means of a swivelling connection provided at a peripheral portion thereof.

The type of swivelling connection can determine ergonomics and reliability, as it can be affected by intensive use, and be constrained by construction complexity and costs.

Moreover, the widespread market penetration of single use portion capsules mostly produced in metallic and plastic materials is increasingly constrained by environmental issues.

This problem has been addressed by several approaches known in prior art.

One approach is to provide a capsule adapted so that can be reused.

The DE 20 2009 009125 U1 discloses a capsule with a container part hinged connected to a lid part.

The US 8,707,855 B2, the US 8,561,524 B2 and the US 10,154,751 B2 also disclose a capsule-like beverage brewing device that presents a body defining a brew chamber configured to contain a dry beverage medium, and a lid that is removably securable to the body, in particular in a hinged-like connection provided by a sideways supported swivelling rod.

Another one of the approaches is the use of re-usable capsule holders providing users with the option of refilling a capsule with a quantity of, for example, ground and roasted coffee.

Document WO 02/082963 A1 discloses a re-usable beverage filter cartridge of the type of the present invention, whereby a cartridge is configured so that can be collected inside of a brewing device and so that can collect a single portion of a beverage portion.

Document EP 24019445 A1 discloses a device of the type of the present invention, for adapting a food capsule into a capsule holder. Said device comprises a holding portion for holding at least a portion of said capsule, and sealing means for circumferentially adapting to the capsule holder and/or to the fluid injection element, and/or to the capsule outside surface, in a leak-tight manner. The holding portion is hinged connected to a lid portion that further comprises sealing means, for example a circular O-ring rubber seal, to ensure that the contact surface between said holding portion and lid is leak-tight. Moreover, the internal shape of the holding portion can be adapted to enclose a soft pod having substantially flexible walls with a generally discoid shape.

The EP 3089634 B1 also discloses a brewing device of the type of the present invention, whereby a portion holder comprises a container part hinged connected to a lid part and adapted so that can operate with different types of single portions. The lid part comprises a first sealing member and a second sealing member which is different from the first sealing member and configured to seal a second brewing chamber between the lid part and a second holder when the second holder is inserted into a hollow of a brewing unit configured for receiving different types of portable pad and/or capsule holders.

The EP 2907425 B1 discloses a brewing system of the type of the present invention whereby a container part is hinged connected to a lid part, and discloses several types of flow distribution upstream of the edible portion.

The prior art thus includes solutions for adapting brewing devices of beverage preparation machines to operate with individual portions of beverage precursor substance in different types of capsules or pods, but there is a need for further optimizing said adapting devices.

### Description of the invention

The present invention discloses a beverage preparation system that includes a beverage preparation device, such as an extraction device, that can be operated with single portions of beverage precursor substance, such as roasted coffee, tea, and similar, and an adapter device that is configured as a portion holder that can operate inside a portion receiving part of said extraction device and be operated with single portions presenting a compostable material envelope, thereby minimizing the environmental impact associated with envelope materials confining said precursor substance.

A first objective is to provide a portion holder of the aforementioned type such that there is provided an effective liquid sealing of the interface region between container and lid parts thereof, thereby preventing any leakage of pressurized flow out of the portion holder.

This objective is solved according to the present invention by means of a portion holder whereby the container part presents a container sealing portion configured as an inward-extending peripheral step of the container part providing an upstream-oriented and inward-protruding support surface for a rim region of single portion and also a support surface for the downstream-oriented peripheral free-edge of the lid part, in particular configured as a lid sealing portion, such that there is provided a sealing engagement of said container and lid sealing portions in case the portion holder is in the closed position.

In particular, the container part can present a container sealing portion configured as an inward-extending peripheral step of the container part providing an upstream-oriented and inward-protruding support surface in an elastically deformable material, whereby said container sealing portion is provided upstream of the downstream sidewall portion and inwards of the upstream sidewall portion.

This advantageously provides for effective and reliable liquid sealing of the interface region between container and lid parts of the portion holder.

It is advantageous when the lid sealing means are configured such that can be provided by bi-material injection moulding of the container and lid parts such that these can be produced as a single piece.

Moreover, the container sealing part can be provided in the same elastically deformable material, and as a material continuation of at least one of retention means and lid connection means associated with the container part of the portion holder, in particular extending around a sidewall and upstream-oriented inward protruding step portion thereof and configured for sealing the interface region of the container and lid parts of portion holder.

This advantageously optimizes the use of two different materials, or materials with different properties, in the portion holder.

An associated objective is to provide a portion holder of the aforementioned type such that can be reliably and simply closed by the user, thereby reinforcing the liquid sealed closure of the lid part on the container part, and preventing hazardous spill offs of hot pressurized fluid upon removal from the extraction device in the beverage preparation apparatus.

This objective is solved according to the present invention by means of a portion holder comprises container and lid parts presenting lid retention means configured so as to provide a user actionable mechanical retention of the lid part on the container part, whereby said lid retention means are not arranged next to the hinged connection of the lid and container parts.

This feature advantageously provides for reliably securing the lid part to the container part, by means of simple user-actionable mechanical arrangement, in particular of a hard-point type, or similar. Moreover, said lid retention means provide an effective actuation of the container and lid sealing means, thus enhancing the sealing effect provided by the sealing means.

In particular, the container and lid parts can present lid retention means configured so as to provide mechanical retention of the lid part on the container part by means of the user applying pressure on a peripheral portion of the top region of the lid part, enough to drive a lid retention portion past a container retention portion.

Moreover, the container and lid parts can present lid retention means configured so as to provide mechanical retention of the lid part on the container part even in case the portion holder is not engaged by the flow provision part of the brewing device, preferentially also requiring the user to apply pressure so as to release the retention of the lid part from the container part.

This advantageously prevents any hazardous uncontrolled spill offs of pressurized hot fluid upon removal of the portion holder from the beverage preparation apparatus.

### List of Figures

The present invention shall be hereinafter described in greater detailed with support of a description of preferred embodiments of main components and respective drawings.

The Figures show:
- Figure 1:: side-cut view diagram of a system and first step of a process according to the present invention;
- Figure 2:: side-cut view diagram of a system and second and third steps of a process according to the present invention, including provision of a portion holder (3) and dropping a single portion (1) inside thereof;
- Figure 3:: side-cut view diagram of a system and fourth step of a process according to the present invention, including introducing the portion receiving part (41) containing the portion holder (3) into the flow provision part (42) of a brewing device (4);
- Figure 4:: side-cut view diagram of a system and third step of a process according to the present invention, including provision of a portion holder (3);
- Figure 5:: side view of an embodiment of an open portion holder (3) in a system according to the invention;
- Figure 6:: perspective top view of open portion holder (3);
- Figure 7:: top view of open portion holder (3);
- Figure 8:: detail view of the lid connection means (6) between container (31) and lid (32) portions of the portion holder (3);
- Figure 9:: perspective side-cut view of open portion holder (3);
- Figure 10:: side-cut views of successive moments of introduction of a portion holder (3) in a extraction device (4) of an apparatus (5) in a system according to the invention;
- Figure 11:: perspective side-cut view of portion holder (3) at an almost closed position;
- Figure 12:: detail side-cut view of the lid connection means (6) of container (31) and lid portions (32);
- Figure 13:: perspective side-cut view of portion holder (3) at a closed position;
- Figure 14:: side-cut view of closed portion holder (3);
- Figure 15:: perspective top view of closed portion holder (3);
- Figure 16:: side view of first embodiment of portion holder (3);
- Figure 17:: side view of second embodiment of portion holder (3);
- Figure 18:: side view of third embodiment of portion holder (3);
- Figure 19:: top view of closed portion holder (3);
- Figure 20:: perspective top view of a portion holder (3) in a non-closed position and containing a single portion (1);
- Figure 21:: side-cut view of a portion holder (3) in a non-closed position and containing a single portion (1);
- Figure 22:: side-cut view of a portion holder (3) in a closed position and containing a single portion (1);
- Figure 23:: side-cut view of a portion holder (3) in a non-closed position and containing a single portion (1), inside of a portion receiving part (41) of extraction device;
- Figure 24:: side-cut view of a portion holder (3) in a closed position and containing a single portion (1), inside of a portion receiving part (41) of extraction device;
- Figure 25:: top view of a second embodiment of a portion holder (3) in an open position;
- Figure 26:: bottom view a second embodiment of a portion holder (3) in an open position;
- Figure 27:: perspective side-cut view of the second embodiment of portion holder (3) and second embodiment of single portion (1);
- Figure 28:: side-cut view of the second embodiment of portion holder (3) and second embodiment of single portion (1).

### Detailed description of preferred embodiments of the invention

The present invention shall be described based upon the general example of a beverage preparation system adapted for operating with single portions (1), such as capsules or pods, in preparing espresso-like coffee, soluble coffee and similar aromatic beverages.

The single portions (1) present a confinement (2) adapted for confining a pre-measured quantity of a beverage precursor substance, such as roast and ground coffee, whereby this confinement (2) is preferentially provided in a compostable material, such as a cellulosic-based material, or similar, and does not include other non-compostable materials, thereby advantageously eliminating environmental waste disposal impacts.

Besides of said single portions (1), such system includes an apparatus (5) with an extraction device (4) adapted so that can collect said single portion (1), when at an open position, and enable exposure thereof to an upstream pressurized fluid flow, usually at a fluid pressure above 2 bar, preferentially above 8 bar, and at a fluid temperature above 80°C, preferentially above 88 °C, when in a closed and operating position, as known in prior art.

Moreover, the general example relates to systems whereby the beverage preparation apparatus (3) includes an extraction device (4) having a portion receiving part (41) provided as stand-alone part, for example configured in a general porta-filter design, presenting a cavity adapted so that can receive a single portion (1) and can be manually inserted for example in a generally draw-like arrangement, into a respective preferentially form fitted flow provision part (42), thereby reaching an operative position thereof.

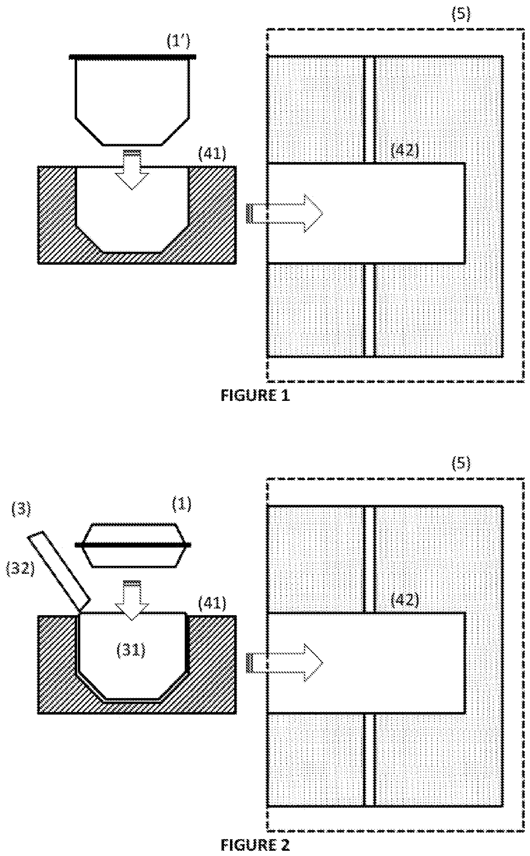

As represented in **Figure 1****,** an embodiment of the system can include a first type of single portion (1') and a beverage preparation apparatus (5) comprising an extraction device (4) having a portion receiving part (41) and a flow provision part (42) that provides pressurized flow upstream of the single portion (1'), for example a plastic capsule, and collection and/or discharge of resulting beverage downstream thereof.

The beverage preparation apparatus (5) can further comprise a flow pressurizing device, such as a hydraulic pump, and a flow heating device, such as a thermoblock. Other aspects of such beverage preparation apparatus (5) are known in prior art such that one herewith abdicated of further details thereof.

In a first step of a process according to the invention, there is provided a portion holder (3) comprising a container (31) hinged connected to a lid portion (32), and adapted so that can receive a single portion (1) different from said first single portion (1') when said lid portion (32) is at an open position, and confine it in liquid sealing manner in case at a closed position.

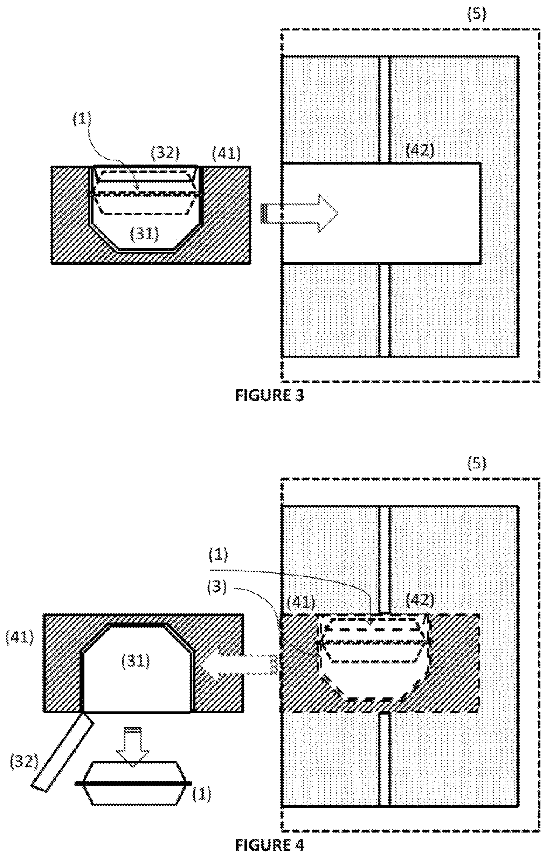

A process according to the present invention is further represented in successive steps in **Figures 2** to **4****.**

In a second step, whereby a portion receiving part (41) is outside with the beverage preparation apparatus (5), un-engaged with the flow provision part (42), a portion holder (3) is inserted into the portion receiving part (41), such that a lid (32) can be operated between open and closed positions. According to an advantageous aspect, the portion holder (3) is inserted in a pressurized fitting manner at least along the lateral portion thereof, such that it is retained inside the portion receiving part (41) by retention means (7) provided on the container portion (31) and does not fall out of it even in case the latter is eventually oriented downwards.

In a third step, a second type of single portion (1) is inserted into the container portion (31) of the portion holder, preferentially by means of manually dropping it inside thereof.

In a fourth step, the portion receiving part (41) is manually inserted into the flow provision part (42), for example in a drawer-like arrangement, such that the receiving part (41) reaches a closed position, and the injection of upstream pressurized flow can be started. In particular, the hinged connection of the lid portion (32) is adapted so that is downwards-pushed by the flow provision part (42) as it gets driven inside thereof and retained in sealed engagement with the container portion (31) whilst inside the flow provision part (42).

The process can further include removing the portion receiving part (41) out of engagement in the flow provision part (42), whereby the hinged connection of the lid portion (32) is adapted so that only raises partially whilst being removed from the downwards-pushing engagement by the flow provision part (41).

The process can further include turning the portion receiving part (41) downwards such that the single portion (1) falls driven by the gravity force out of the container portion (31), but the portion holder (3) further remains retained inside the portion receiving part (41). This feature advantageously enhances the convenience of use of the portion holder (3).

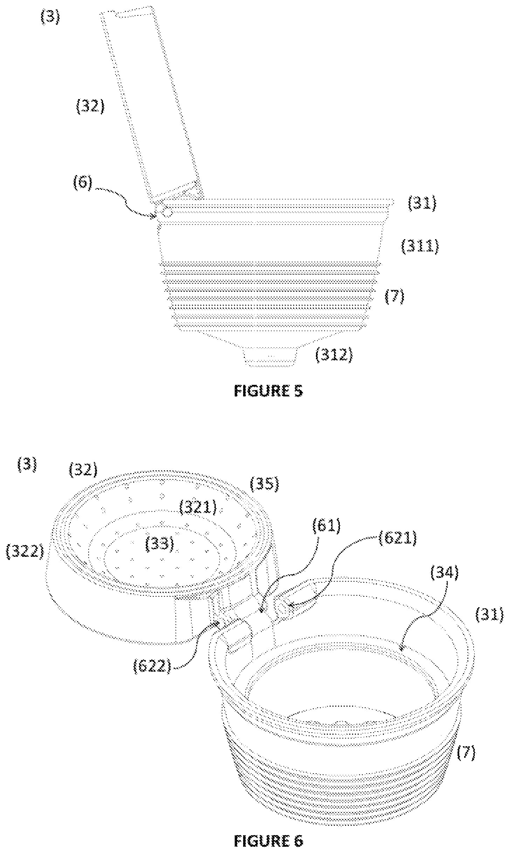

**Figures 5** to **8** represent a preferred embodiment of a portion holder (3) according to the present invention, comprising a container portion (31) with a rotationally symmetric sidewall (311) and base wall (312) defining a cavity space, and a lid portion (32) peripherally hinged to the container portion (31) by means of lid connection means (6) so that can be operated into a closed position whereby the single portion (1) can be confined inside the cavity space.

The container part (31) is adapted so that can be retained inside a portion receiving part (41) of an extraction device (4) that can be manually held and operated in a draw-like manner into an operating position engaged with a flow provision part (42) of said extraction device (4) that can present the general features described in association with previous figures.

As depicted, the portion holder (3) comprises a container part (31) with a sidewall (311) and a base wall (312), and a lid part (32) with a flow-conducting wall (321) extending transversally to the prevailing flow direction and presenting flow passageways (33) and a collar-like flow-confining wall (322) extending laterally peripherally of the flow-conducting wall (321), and jointly confining a collection space extending upstream and downstream of the peripheral interface region between container and lid parts (31, 32).

As referred above, there are portion holders of this type known in the prior art, presenting a hinged connection of the container and lid parts. Given the repetitive and numerous actuation of said hinged connection, this type of connection can be prone to mechanical wear and tear issues, for example in the case of using spring-driven connections, or to ergonomic constrains, such as in the case of lever-like digital actuation supports.

According to a notorious feature of the portion holder (3) according to the present invention, the lid part (32) is peripherally hinged connected to the container part (31) by lid connection means (6) that include a material connection (61) of the container part (31) with the lid part (32), whereby said lid connection means (6) are configured such that can be provided by injection moulding of the container and lid parts (31, 32) such that these can be produced as a single piece.

This advantageously simplifies the hinged connection of the lid and container parts (31, 32), providing a long lasting reliable and simple connection.

It is further advantageous when the lid connection means (6) include a material connection (61) provided in the form of an elastically bendable element, preferentially in a band shape or similar, that extends continuously from the upstream region of the upstream sidewall (311) of container part (31) to the lid part (32), whereby the material connection (61) preferentially includes an elastic material band that is provided such that exerts an elastic force on the lid part (32) upwards in respect of the container part (31), such that the lid part (32) tends towards the open position.

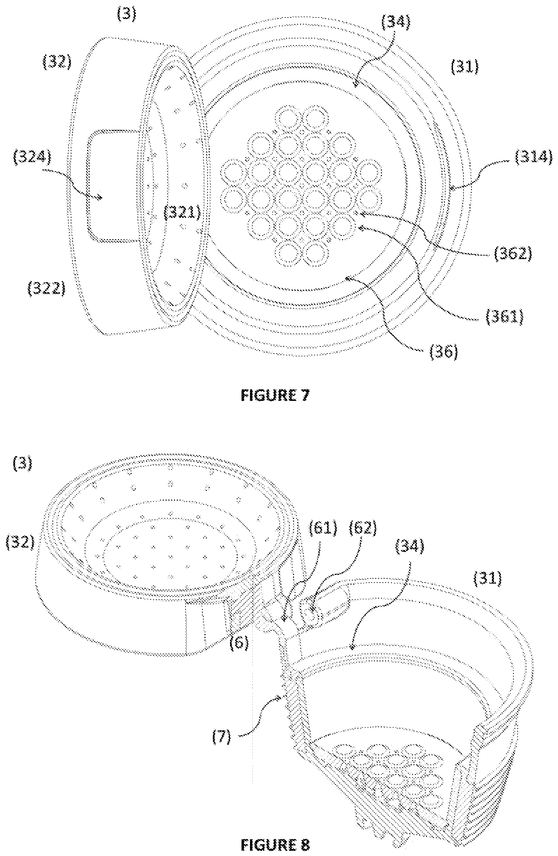

As can be best seen in Figures 6 and 8, the lid connection means (6) can include a connection retention arrangement (62) adapted so that can assist the retention of the lid part (32) at the closed position on the container part (31).

The connection retention arrangement (62) preferentially includes a male-female arrangement (621, 622) in opposing edges of, and arranged sideways in respect of, the material connection (61) and adapted so as to provide a first hard-point retention of the lid part (31) on the container part (31).

The male-female arrangement (621, 622) is preferentially provided on respective peripheral support non-curved portions of the container and lid parts (31, 32) and corresponding to a portion of, and to a projection on, the upstream free-edge region, respectively.

The lid connection means (6) and the holder retention means (7) are provided in a material with similar elastic properties, preferentially in a same material provided that extends continuously from the retention means (7) to the lid connection means (6),

The lid connection means (6) and the holder retention means (7) can be provided in a unique part, or piece, together with the container and lid parts (31, 32) by means of bi-material injection moulding.

The portion holder (3) can further include flow dispensing means (36), preferentially provided as a disk-like single piece, adapted so that can be retained on, preferentially by means of nut-groove peripheral engagement with, the base wall (312) of the container part (31), whereby said flow dispensing means (36) present projections (361) extending upstream from a base portion and configured with a non-puncturing and non-perforating shape, for example with a spherical-like shape with a circular cross-section profile, and further present at least one, preferentially a plurality of, flow passageways (362) configured as holes on the base portion of the flow dispensing means (36).

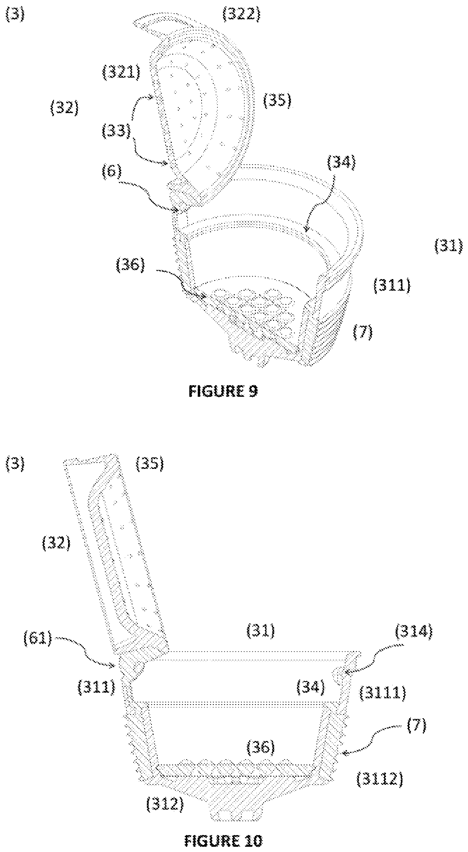

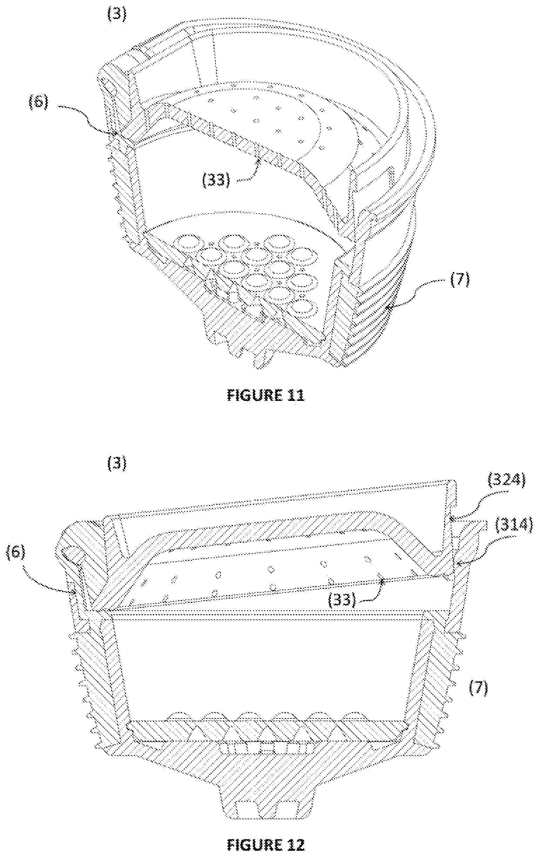

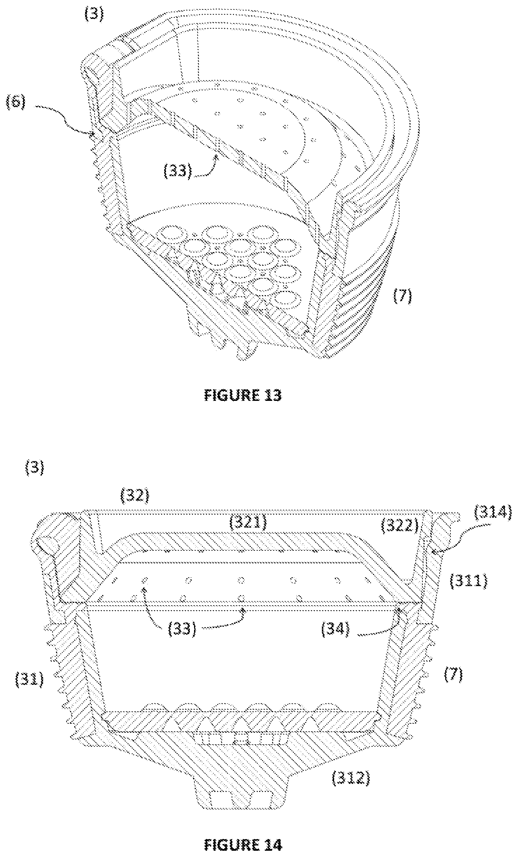

**Figures 9** to **14** show several cut views of the embodiment of portion holder (3) in a system according to the present invention.

The Applicant has tested several embodiments of a portion holder of the type of the present invention, and determined that the retention thereof inside of the portion receiving part (41) of extraction device (4), should be very advantageous in terms of general ergonomic use thereof.

According to a notorious feature, the portion holder (3) according to the present invention presents retention means (7) presenting a different configuration and different material properties from the configuration and material properties of the sidewall (311) of the container part (31), and adapted so that said container portion (31) can be retained in pressurized fitting inside said portion receiving part (41).

In particular, the retention means (7) can be provided in a different material or in a different material composition as the rest of said container part (31).

Moreover, the retention means (7) are provided in an elastically deformable material, for example a rubber-like synthetic material, whereas the container part (31) can be provided in a substantially rigid material.

This feature advantageously provides for a more effective retention of the container part (31), because the retention means (7) thus provide for an enhanced pressurized fitting of the portion holder (3) inside the cavity of the portion receiving part (41) of the extraction device (4).

It is preferred when the container part (31) supports retention means (7) provided in a tubular shape around at least part, preferentially at least most part, more preferentially all of the sidewall (311) such that can be pressed under peripheral strain inside said portion receiving part (41).

Moreover, the retention means (7) can present at least one, preferentially several projections extending outward in respect of at least most of the remaining sidewall (311) of container part (31), preferentially all of the remaining sidewall (311) that sits inside of the portion receiving part (41).

Moreover, at least one of, preferentially both, the retention means (7) and the container part (31) of portion holder (3) are provided in a different material or in a different material composition as the portion receiving part (41).

The retention means (7) can present a non-smooth, preferentially grooved, exterior surface presenting at least one of: a rugosity and a pattern, with projections extending outwards in at least one of: a transversal and parallel direction in respect of the prevailing flow direction, configured so as to generate a material pressure with the corresponding interior surface of said portion receiving part (41) transversal to said prevailing flow direction, whereby the retention means (7) are preferentially provided in a material at least partially elastically deformable.

The retention means (7) can be provided as a plurality of outwards extending projections arranged successively, for example in rows, at least from the vicinity of the peripheral interface region between container and lid parts (31, 32) to the base wall

(312). In particular, the retention means (7) can be provided as outwards extending projections presenting a cross-section profile narrowing from the base towards the free-edge thereof.

As further represented in these drawings, the portion holder (3) comprises a container part (31) with a sidewall (311) that presents an upstream sidewall portion (3111) and a downstream sidewall portion (3112) that is recessed inwards relative to the upstream sidewall portion (3111), and preferentially also relative to an outward extending portion of the base wall (32), and the retention means (7) are provided on a laterally-oriented indent associated with said downstream sidewall portion (3112), such that the retention means (7) extend inwards and outwards in respect of the upstream sidewall portion (3111).

According to another notorious feature of the portion holder (3), the retention means (7) are provided as an injection moulded part that extends through a perimeter transition region between upstream and downstream sidewall portions (3111, 3112) thereby forming at least one of:
- a container sealing portion (34) extending inwards along the interior perimeter and that provides sitting support, in the peripheral interface region between the container and lid parts (31, 32), for a rim portion of the single portion (1) and to a lid sealing portion (35), and
- a material connection (61) of lid connection means (6) that provide the hinged connection of the lid part (32) with the container part (31) at a peripheral region thereof.

This feature advantageously provides for a multiple use and benefit of use, of an elastically deformable material in the portion holder (3), not only in as retention means (7) thereof, but also as at least part of the liquid sealing means and hinged connection means.

As should also be known to the expert in the field, this type of systems, including both extraction devices and single portions, configured for being impinged by pressurized flows, can present liquid sealing issues.

According to another notorious feature of the portion holder (3) according to the present invention, the container part (31) presents a container sealing portion (34) for providing liquid sealing of the portion holder (3) in the closed position, said container sealing portion (34) configured as an inward-extending peripheral step providing an upstream-oriented support surface for a rim region of single portion (1) and also a support surface for the downstream-oriented peripheral free-edge of the lid part (32), in particular configured as a lid sealing portion (35), such that there is provided a sealing engagement of said container and lid sealing portions (34, 35) in case the portion holder (3) is in the closed position.

This feature advantageously provides for effective and reliable liquid sealing of the interface region between container and lid parts (31, 32) of the portion holder (3).

In particular, the container part (31) can present a container sealing portion (34) configured as an inward-extending peripheral step provided in an elastically deformable material, whereby said container sealing portion (34) is provided upstream of the downstream sidewall portion (3112) and inwards of the upstream sidewall portion (3111).

The container sealing portion (34) and the holder retention means (7) can be provided in a material with similar elastic properties, preferentially in a same material or a material with similar composition, that extends continuously from the retention means (7) to the container sealing arrangement (34), whereby the lid connection means (6) and the holder retention means (7) are provided in a single part or piece as the container and lid parts (31, 32) by means of bi-material injection moulding.

This again provides for the benefits of using an elastically deformable material together with a different material, in particular a rigid material, in the portion holder (3).

The lid part (32) can present a lid sealing portion (35) provided on the downstream-oriented peripheral free-edge of the lid part (32), whereby said lid sealing portion (35) presents a downstream-oriented peripheral nut, for example in a V-like cross-section shape, or similar, and whereby said lid sealing portion (35) is configured to sit under pressure on the container sealing portion (34) thereby providing a sealing engagement of said container and lid sealing portion (34, 35) in case the portion holder (3) is closed.

The container part (31) can support a container sealing portion (34) provided in an elastically deformable material, preferentially a material different from the container part (31), and

The lid part (32) can present a lid sealing portion (35) provided in the same material as the remaining lid part (32), preferentially in a non-elastic rigid material.

The portion holder (3) can comprise container and lid parts (31, 32) with respective container and lid sealing portions (34, 35) that are provided in mutually opposing regions, in particular in a downstream-oriented base region and in a upstream-oriented inwards extending step, respectively, and adapted such that the lid sealing portion (35) sits under closure-driving pressure on the container sealing portion (34) along a continuous peripheral extension in the closed position of the portion holder (3), whereby said closure-driving pressure can be provided by at least one of:
- pressurized engagement of the top region of the lid part (32) with the flow provision part (42) of extraction device (4);
- pressurized engagement of lid retention means (324) corresponding to a closed position of the portion holder (3).

The expert in the field is familiar with the relevance of upstream flow distribution in respect of the upstream-oriented surface of the edible substance inside a single portion (1), in particular if the flow-feeding part (42) of the extraction device (4) presents a single inlet of pressurized flow.

According to another notorious feature, the portion holder (3) comprises a lid part (32) that presents a flow-conducting wall (321) in a generally downstream-oriented convex shape, for example in a frusto-conic shape, configured such that the cavity space confined by the portion holder (3) extends to the vicinity of the upstream feed-edge thereof while providing an upstream-oriented free space extending peripherally in respect of the flow-conducting wall (321) at a distance downstream of the upstream free-edge of the lid part (32). In particular, said flow-conducting wall (321) presents a plurality of flow passageways (33), for example arranged in a matrix-like pattern, extending in a direction similar to the prevailing flow direction and provided on different portions of the downstream-oriented convex shape of the flow-conduction wall (321), at different levels downstream relative to the upstream free-edge of the lid part (32).

This feature advantageously provides for a better flow distribution upstream of the single portion (1) and therefore, enhanced extraction efficiency of the edible substance, such as for example roasted ground coffee or soluble coffee, or similar beverage precursor substances.

Moreover, the portion holder (3) can comprise a lid part (32) that presents a collar-like flow-confining wall (322) extending laterally peripherally of a flow-conducting wall (321) and extending upstream from a lid sit region (323) common to the flow-conducting wall (321), whereby the exterior perimeter of the flow-conducting wall (321) corresponds to at least 80%, preferentially at least 85% of the interior perimeter of the flow-confining wall (322).

The flow-confining wall (322) can extend upstream configuring an upstream free-edge of the lid part (32) such that, in case the portion holder (3) is closed, the upstream free edge of the flow-confining wall (322) can extend at a level that is similar to, preferentially higher by a tolerance than, the peripheral edge of the container part (31).

According to another notorious feature, the portion holder (3) can comprise a lid part (32) that presents a collar-like flow-confining wall (322) laterally extending along the periphery region of a flow-conducting wall (321), said lid part (32) including or supporting at least one of, preferentially all of:
- lid connection means (6; 61, 62) arranged at a first peripheral region thereof and providing swivelling connection with the container part (31);
- lid retention means (324) arranged on a second peripheral region thereof, preferentially opposite to the first peripheral region;
- lid sealing portion (35) extending along a downstream-oriented peripheral edge common to the flow-conducting wall

(321). This arrangement advantageously provides a simple overall construction of the portion holder (3).

The Applicant has tested several possible portion holders in different extraction devices (4), and thereby learned that there is a risk to the user resulting from an unconstrained removal of the portion holder from the extraction device (4), after termination of the pressurized flow injection associated with the beverage extraction, whereby uncontrolled hydraulic pressure-driven opening of the portion holder and unintended spills of hot water may occur.

In this regard, according to another notorious feature of the present invention, the portion holder (3) comprises container and lid parts (31, 32) presenting lid retention means (314, 324) configured so as to provide a user actionable mechanical retention of the lid part (32) on the container part (31), whereby said lid retention means (314, 324) are not arranged next to the hinged connection of the lid and container parts (31, 32).

This feature advantageously provides for reliably securing the lid part (32) to the container part (31), by means of simple user-actionable mechanical arrangement, in particular of a hard-point type, or similar. Moreover, said lid retention means (314, 324) provide an effective actuation of the container and lid sealing means (34, 35).

Moreover, the portion holder (3) comprises container and lid parts (31, 32) presenting lid retention means (314, 324) configured so as to provide mechanical retention of the lid part (32) on the container part (31) by means of the user applying pressure on a peripheral portion of the top region of the lid part (32), enough to drive a lid retention portion (324) past a container retention portion (314).

Moreover, the portion holder (3) comprises container and lid parts (31, 32) presenting lid retention means (314, 324) configured so as to provide mechanical retention of the lid part (32) on the container part (31) even in case the portion holder (3) is not engaged by the flow provision part (42) of the brewing device, preferentially also requiring the user to apply pressure so as to release the retention of the lid part (32) from the container part (31).

Moreover, the portion holder (3) comprises container and lid parts (31, 32) presenting lid retention means (314, 324) configured so as resist the upwards-acting hydraulic pressure build-up inside the confined space of the portion holder (3) associated with flow injection, whereby the lid retention means (314, 324) are preferentially configured such that can provide retention and release thereof by means of a similar gesture and pressure by the user, and preferentially providing haptic perception thereof to the user.

Moreover, the portion holder (3) presents lid retention means (314, 324) arranged opposite to connection means (6), in particular to connection retention means (621, 622) associated with the connection means (6) of the lid part (32) to the container part (31), such that there are provided mutually opposing mechanical retentions of the lid part (32) of portion holder (3), whereby said retentions are preferentially configured so that can be jointly actuated.

Moreover, the portion holder (3) presents lid retention means (314, 324) configured as a localized embossment of the internal surface of the container part (31) operationally aligned with a flattened exterior portion of the flow-confining wall (322) of the lid part (32), such that the lid part (32) can be retained in a closed position and the lid sealing portion (35 is pressed downwards against container sealing portion (34).

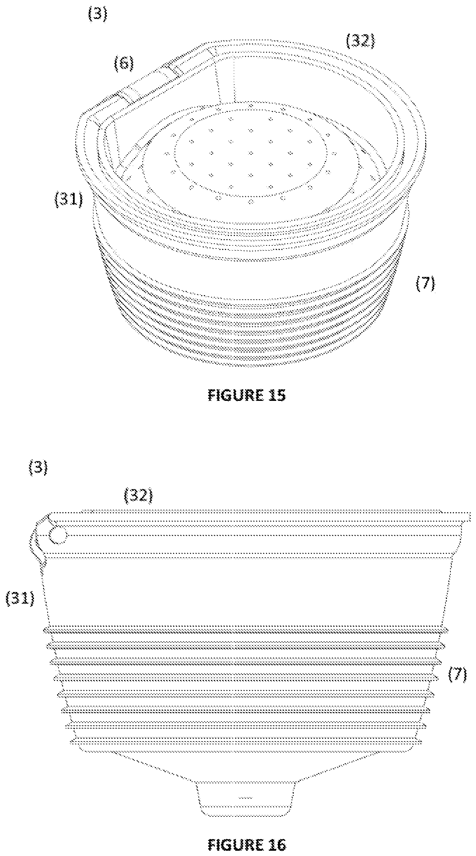

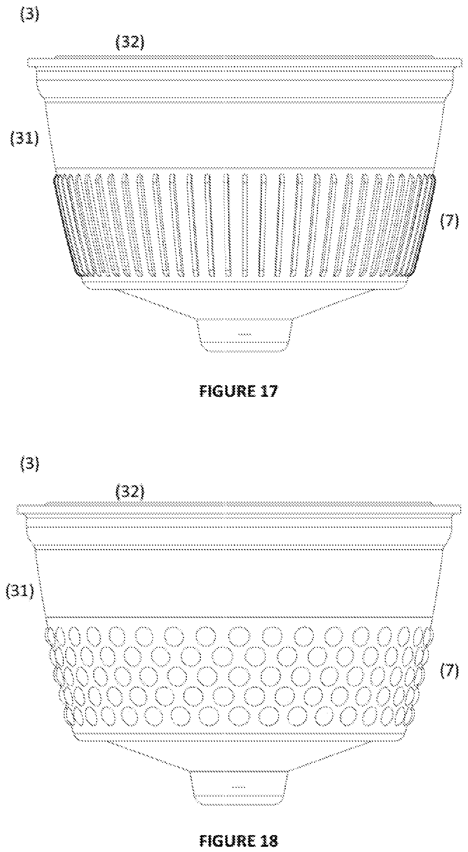

**Figures 15** to 18 show several preferred embodiments of retention means (7) in a portion holder (3) according to the present invention.

In a preferred embodiment the retention means (7) can present a plurality of projections configured as ribs extending outwards and circumferentially around the sidewall of container part (31). Alternatively, the rib-like projections can extend along meridional alignments arranged successively around the external engaging surface of the container part (31) next to the base wall (312) thereof. The wall thickness of each retention rib can be smaller than the interstitial space in-between neighbouring ribs. It is advantageous when the projections do not extend outwards further than the broadest vertical projection of the container part (31).

In a different embodiment the retention means (7) can be configured as spherical or frusto-conical projections arranged in successive rows along the outside surface so as to be engaged by pressurized fitting when the portion holder (3) is inserted into the portion receiving part (41) of the extraction device (4).

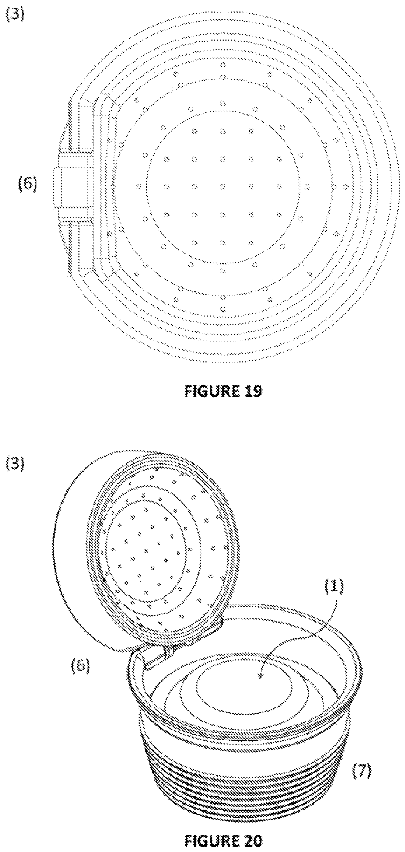

**Figure 19** shows a top view of a preferred embodiment of the lid part (32) presenting a plurality of flow passageways (33), and respective relation to the lid connection means (6).

As also referred above and depicted in previous drawings, the flow passageways (33) are provided on different concentric regions of the flow conducting part (321) of the lid part (32), each of said concentric regions extending at different inclinations relative to the prevailing flow direction, such that the upstream flow can be conducted downstream at different relative levels.

It is advantageous when the flow passageways (33) are provided in a regular matrix-like arrangement over the flow conducting part (321), including in a central region that extends substantially transversally to the prevailing flow direction and in a peripheral region that extends at a reduced angle relative to the prevailing flow direction, for example of less than 30°, preferentially less than 20°.

**Figure 20** shows the portion holder (3) at an open position with the single portion (1) inside the container part (31) thereof.

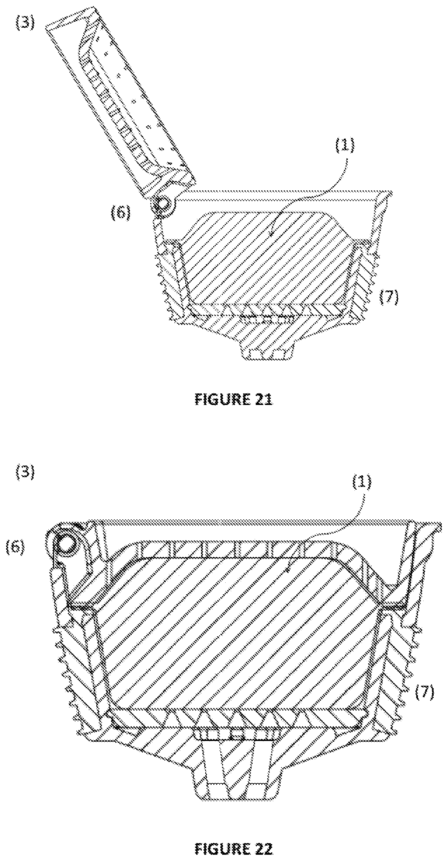

**Figures 21** to **22** show different side-cut views of the portion holder (3) with single portion (1) inside thereof, both in open and closed positions.

According to a notorious feature, the single portion (1) presents volumetric shape and dimension that are similar to the volumetric shape and dimension of the collection space provided by container and lid parts (31, 32).

This feature advantageously provides a maximum use of the volume available inside the portion holder (3), notably for the edible substance containing single portion (1).

The single portion (1) can present a rim wall portion arranged at a relative level such that the single portion (1) can sit therewith on a support step provided as container sealing support (34) of the container part (31), whereby said container sealing portion (34) is preferentially provided on a elastically deformable material, whereby the most but not all of the beverage precursor substance is provided in the downstream portion thereof.

The single portion (1) can confine an edible substance collection space presenting volumetric shape and volumetric dimension that are similar to the volumetric shape and dimension of the collection space provided by container and lid parts (31, 32), whereby there is provided a beverage flow dispensing means (36) on the bottom region of the container part (31), such that the exterior surface of said single portion (1) is in direct contact with the flow conducting wall (321) of the lid part (32) on the upstream side, and with said beverage flow dispensing means (36) siting on the base wall (312) of the container part (31) on the downstream side, upstream of and in flow communication with a beverage discharge outlet arranged on said base wall (312).

The single portion (1) can confine an edible substance collection space presenting similar volumetric shape and similar volumetric dimension to the volumetric shape and dimension of the collection space provided by container and lid parts (31, 32) such that the top region thereof is in contact with the convex-like interior surface of the flow conducting wall (321) of the lid part (32), and whereby part of the volume of the single portion (1) occupied by the edible substance extends within the volume confined by the lid part (32) upstream of container sealing portion (35).

In this embodiment, a bigger volume fraction of single portion (1) extends downstream and a smaller volume fraction extends upstream of the interface region between container and lid parts (31, 32), and such that the exterior surface thereof is in the vicinity or in contact with the interior surface provided by said container and lid parts (31, 32), optionally also with a flow-dispensing part (36) provided on the base wall (312).

The single portion (1) can be configured such that, inside the closed portion holder (3) and in a non-flow condition, can be pressed downwards by the convex-like interior surface of the flow conducting wall (321).

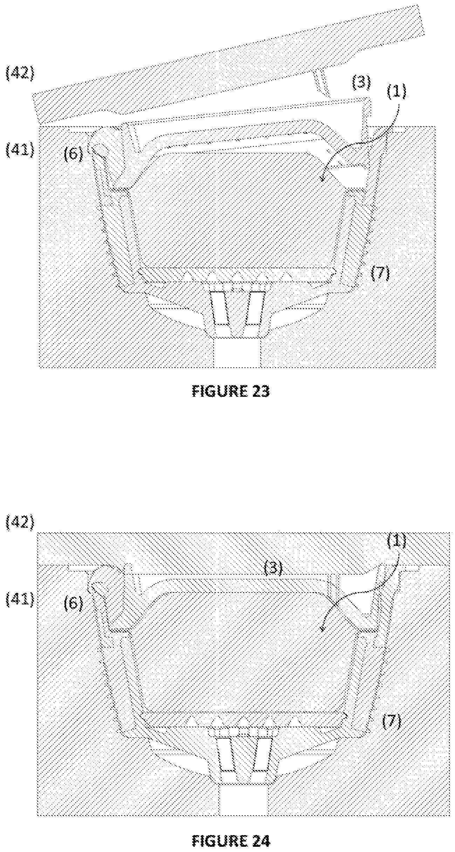

**Figures 23** and **24** represent two particular moments of a process of beverage preparation according to the present invention.

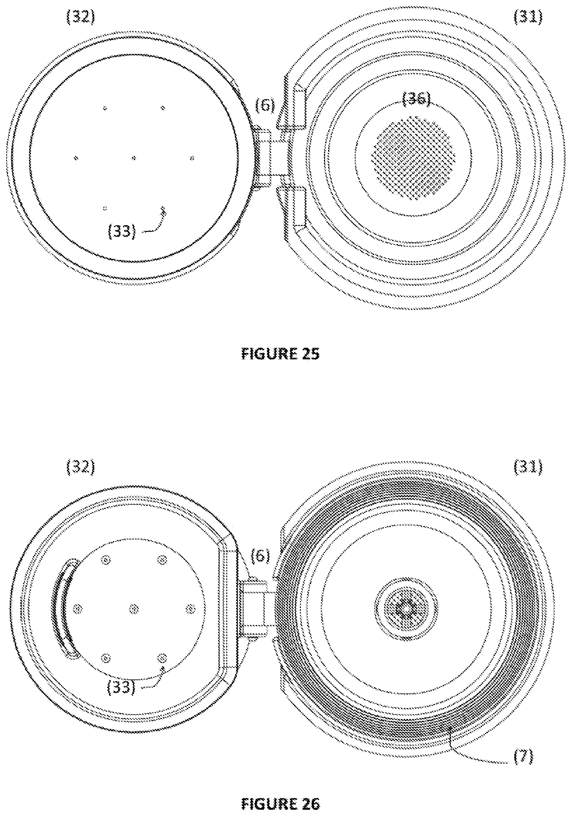

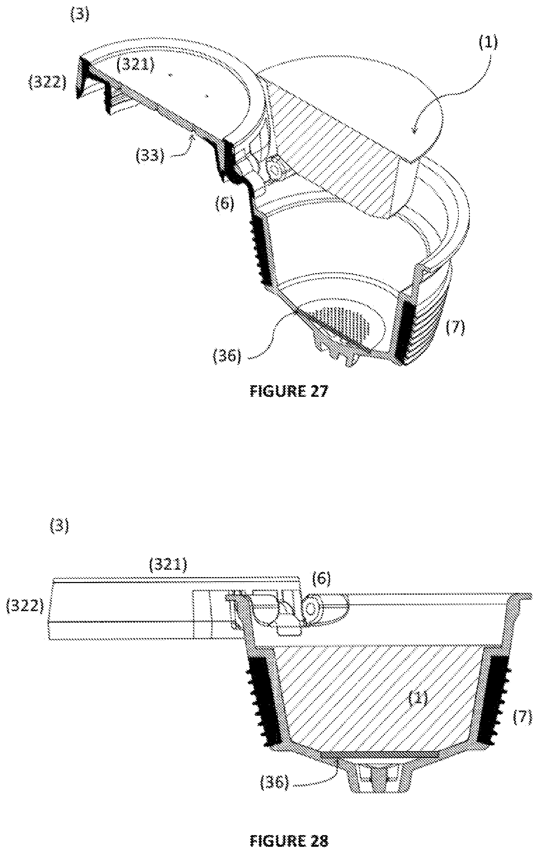

**Figures 25** to **28** represent a second embodiment of portion holder (3) whereby the flow conducting wall (321) presents a flat configuration that is non-recessed relative to the top wall of a single portion (1).

The single portion (1) in this case presents a lid part and a container part, whereby the lid part comprises a planar disk-like top wall that can be coupled coplanar with a rim region such that all edible substance can be confined below said top wall and respective rim region.

In this case the flow dispensing means (36) are provided as a circular plate, preferentially in a metallic or synthetic material, presenting a plurality of neighbouring flow discharge openings and adapted so that can be retained, for example by means of pressured fitting, on an interior-oriented portion of the base wall of portion holder (3), in flow communication with flow outlets thereof.

## Claims

1. Portion holder for receiving a single portion (1) comprising a compostable and permeable confinement (2) for collecting a given quantity of beverage precursor substance, said portion holder (3) is adapted so that can be inside a portion receiving part (41) of an extraction device (4), and comprises:
- a container part (31) with a sidewall (311) and a base wall (312), and
- a lid part (32) with a flow-conducting wall (321) presenting flow passageways (33),
jointly confining a collection space extending at least downstream of the peripheral interface region between container and lid parts (31, 32),
said lid part (32) being peripherally hinged to the container part (31) by lid connection means (6) so that can be operated to a closed position at which the single portion (1) is confined inside the cavity space,
said container part (31) being adapted so that can be retained by retention means (7) inside the portion receiving part (41) of the extraction device (4) that can be manually held and operated in a draw-like manner into an operating position engaged with a flow provision part (42) of said extraction device (4), whereby the container part (31) presents a container sealing portion (34) for providing liquid sealing of the portion holder (3) in the closed position, said container sealing portion (34) configured as an inward-extending peripheral step providing an upstream-oriented support surface for a rim region of single portion (1) and also a support surface for the downstream-oriented peripheral free-edge of the lid part (32), in particular configured as a lid sealing portion (35), such that there is provided a sealing engagement of said container and lid sealing portions (34, 35) in case the portion holder (3) is closed, and
- said lid part (32) presents a collar-like flow-confining wall (322) extending laterally peripherally of a flow-conducting wall (321) extending transversally to the prevailing flow direction;
said portion holder being **characterized in that**
- said container part (31) comprises a sidewall (311) presenting an upstream sidewall portion (3111) and a downstream sidewall portion (3112) that supports retention means (7) adapted for pressurized fitted retention of said container part (31) inside the portion receiving part (41);

2. Portion holder according to claim 1, **characterized in that** the lid part (32) presents a lid sealing portion (35) provided on the downstream-oriented peripheral free-edge of the lid part (32), whereby said lid sealing portion (35) is configured to sit under pressure on the container sealing portion (34) thereby providing a sealing engagement of said container and lid sealing portion (34, 35) in case the portion holder (3) is closed.

3. Portion holder according to claim 1 or 2, **characterized in that** the container part (31) supports a container sealing portion (34) provided in an elastically deformable material, preferentially a material different from the container part (31), and
**in that** the lid part (32) presents a lid sealing portion (35) provided in the same material as the remaining lid part (32), preferentially in a non-elastic rigid material.

4. Portion holder according to any of claims 1 to 3, **characterized**
**in that** the container and lid parts (31, 32) present respective lid retention means (314, 324) configured so as to provide a user actionable mechanical retention of the lid part (32) on the container part (31), whereby said lid retention means (314, 324) are not arranged next to the hinged connection of the lid and container parts (31, 32), whereby the lid retention means (314, 324) are preferentially configured as a localized embossment of the internal surface of the container part (31) operationally aligned with a flattened exterior portion of the flow-confining wall (322) of the lid part (32), such that the lid part (32) can be retained in a closed position and the lid sealing portion (35) is pressed downwards against container sealing portion (34).

5. Portion holder according to any one of previous claims 1 to 4, **characterized**
**in that** the container and lid parts (31, 32) present respective container and lid sealing portions (34, 35) that are provided in mutually opposing regions, in particular in a downstream-oriented base region and in a upstream-oriented inwards extending step, respectively, and adapted such that the lid sealing portion (35) sits under closure-driving pressure on the container sealing portion (34) along a continuous peripheral extension in the closed position of the portion holder (3), whereby said closure-driving pressure can be provided by at least one of:
- pressurized engagement of the top region of the lid part (32) with the flow provision part (42) of extraction device (4);
- pressurized engagement of lid retention means (324) corresponding to a closed position of the portion holder (3).

6. Portion holder according to any one of previous claims 1 to 5, **characterized**
**in that** the container and lid parts (31, 32) present lid retention means (314, 324) configured so as to provide mechanical retention of the lid part (32) on the container part (31) by means of the user applying pressure on a peripheral portion of the top region of the lid part (32), enough to drive a lid retention portion (324) past a container retention portion (314), whereby the lid retention means (314, 324) are configured so as to provide mechanical retention of the lid part (32) on the container part (31) even in case the portion holder (3) is not engaged by the flow provision part (42) of the brewing device, preferentially also requiring the user to apply pressure so as to release the retention of the lid part (32) from the container part (31).

7. Portion holder according to any one of previous claims 1 to 6, **characterized**
**in that** the container and lid parts (31, 32) present lid retention means (314, 324) configured so as resist the upwards-acting hydraulic pressure build-up inside the confined space of the portion holder (3) associated with flow injection.

8. Portion holder according to any one of previous claims 1 to 7, **characterized**
**in that** the container and lid parts (31, 32) present retention means (314, 324) arranged opposite to connection means (6), in particular to connection retention means (621, 622) associated with the connection means (6) of the lid part (32) to the container part (31), such that there are provided mutually opposing mechanical retentions of the lid part (32) of portion holder (3), whereby said retentions are preferentially configured so that can be jointly actuated.

9. Portion holder according to any one of previous claims 1 to 8, **characterized**
**in that** the container and lid parts (31, 32) present lid retention means (314, 324) configured as a localized embossment of the internal surface of the container part (31) operationally aligned with a flattened exterior portion of the flow-confining wall (322) of the lid part (32), such that the lid part (32) can be retained in a closed position whereby a lid sealing portion (35 is pressed downwards against container sealing portion (34).

10. Portion holder according to any one of previous claims 1 to 9, **characterized**
**in that** the container sealing portion (34) and the holder retention means (7) are provided in a material with similar elastic properties, preferentially in a same material or a material with similar composition, that extends continuously from the retention means (7) to the container sealing portion (34),
whereby the lid connection means (6) and the holder retention means (7) are provided in a single part or piece together with the container and lid parts (31, 32) by means of bi-material injection moulding.

11. Portion holder according to any one of previous claims 1 to 10, **characterized**
**in that** the container part (31) presents a sidewall (311) with an upstream sidewall portion (3111) and a downstream sidewall portion (3112) that is recessed inwards relative to the upstream sidewall portion (3111), and preferentially also relative to an outward extending portion of the base wall (32), and
**in that** the container part (31) presents a container sealing portion (34) configured as an inward-extending peripheral step provided in an elastically deformable material, whereby said container sealing portion (34) is provided upstream of the downstream sidewall portion (3112) and inwards of the upstream sidewall portion (3111).

12. Portion holder according to any one of previous claims 1 to 11, **characterized**
**in that** the lid part (32) presents a collar-like flow-confining wall (322) laterally extending along the periphery region of a flow-conducting wall (321), said lid part (32) including or supporting at least one of:
- lid connection means (6; 61, 62) arranged at a first peripheral region thereof and providing swivelling connection with the container part (31);
- lid retention means (324) arranged on a second peripheral region thereof, preferentially opposite to the first peripheral region;
- lid sealing portion (35) extending along a downstream-oriented peripheral edge common to the flow-conducting wall (321).

13. Portion holder according to any one of previous claims 1 to 12, **characterized**
**in that** the retention means (7) are provided as an injection moulded part that extends through a perimeter transition region between upstream and downstream sidewall portions (3111, 3112) thereby forming at least one of:
- a container sealing portion (34) extending inwards along the interior perimeter and that provides sitting support, in the peripheral interface region between the container and lid parts (31, 32), for a rim portion of the single portion (1) and to a lid sealing portion (35), and
- a material connection (61) of lid connection means (6) that provide the hinged connection of the lid part (32) with the container part (31) at a peripheral region thereof.

14. System for preparing beverages and including a portion holder (3) according to any one of previous claims 1 to 13, **characterized**
**in that** said system further comprises a beverage preparation apparatus (5) comprising said extraction device (4) and pressurized flow means upstream thereof so that a pressurized fluid can flow in a prevailing direction through said extraction device (4), portion holder (3) and single portion (1) inside thereof.

## Patentansprüche

1. Portionshalter zum Aufnehmen einer einzelnen Portion (1), umfassend ein kompostierbarer und durchlässiger Einschluss (2) zum Auffangen einer gegebenen Menge an Getränkevorläufersubstanz, wobei der Portionshalter (3) so ausgebildet ist, dass er sich innerhalb eines Portionsaufnahmeteils (41) einer Extraktionsvorrichtung (4) befinden kann, und umfassend:
- ein Behälterteil (31) mit einer Seitenwand (311) und einer Bodenwand (312) und
- ein Deckelteil (32) mit einer strömungsleitenden Wand (321), die Strömungsfließkanäle (33) aufweist,
gemeinsam begrenzend einen Auffangraum, der sich mindestens stromabwärts des Umfangsgrenzbereichs zwischen Behälter- und Deckelteilen (31, 32) erstreckt,
wobei das Deckelteil (32) durch ein Deckelverbindungsmittel (6) umlaufend mit dem Behälterteil (31) eingehängt ist, so dass es bis zu einer geschlossenen Stellung betätigt werden kann, bei der die einzelne Portion (1) innerhalb des Hohlraums eingeschlossen ist,
wobei das Behälterteil (31) so angepasst ist, dass es durch Rückaltemittel (7) innerhalb des Portionsaufnahmeteils (41) der Extraktionsvorrichtung (4) gehalten werden kann, der manuell in einer zugartigen Weise gehalten und betätigt werden kann, die mit einem Durchflussversorgungsteil (42) der Extraktionsvorrichtung (4) verbunden ist,
wobei das Behälterteil (31) einen Behälterdichtungsabschnitt (34) zum Bereitstellen einer Flüssigkeitsabdichtung des Portionshalters (3) in der geschlossenen Stellung aufweist, wobei der Behälterdichtungsabschnitt (34) als eine nach innen verlaufende Umfangsstufe ausgebildet ist, die eine stromaufwärts ausgerichtete Auflagefläche für einen Umfangsbereich einer einzelnen Portion (1) sowie eine Auflagefläche für die stromabwärts ausgerichtete umlaufende Freikante des Deckelteils (32) bietet, insbesondere als Deckeldichtungsabschnitt (35) ausgebildet, so dass ein Dichtungseingriff der Behälter- und Deckeldichtungsabschnitte (34, 35) vorgesehen ist, falls der Portionshalter (3) geschlossen wird, und
- das Deckelteil (32) weist eine kragenartige, strömungsbegrenzende Wand (322) auf, die sich seitlich umlaufend einer strömungsleitenden Wand (321) erstreckt, die sich quer zur vorherrschenden Strömungsrichtung erstreckt;
wobei der Portionshalter **dadurch gekennzeichnet ist, dass**
- das Behälterteil (31) eine Seitenwand (311) umfasst, die einen stromaufgewandten Seitenwandabschnitt (3111) und einen stromabgewandten Seitenwandabschnitt (3112) aufweist, der Rückaltemittel (7) trägt, die für die druckbeaufschlagte Befestigung des Behälterteils (31) innerhalb des Portionsaufnahmeteils (41) geeignet sind.

2. Portionshalter nach Anspruch 1, **dadurch gekennzeichnet, dass** das Deckelteil (32) einen Deckeldichtungsabschnitt (35) aufweist, der an der stromabwärts gerichteten umlaufenden Freikante des Deckelteils (32) vorgesehen ist, wobei der Deckeldichtungsabschnitt (35) so ausgebildet ist, dass er unter Druck auf dem Behälterdichtungsabschnitt (34) sitzt, wodurch ein Dichtungseingriff des Behälter- und Deckeldichtungsabschnitts (34, 35) entsteht, falls der Portionshalter (3) geschlossen wird.

3. Portionshalter nach Anspruch 1 oder 2, **dadurch gekennzeichnet, dass**
das Behälterteil (31) einen Behälterdichtungsabschnitt (34) trägt, der in einem elastisch verformbaren Material, vorzugsweise einem von dem Behälterteil (31) anderen Material, vorgesehen ist, und dass
das Deckelteil (32) einen Deckeldichtungsabschnitt (35) aufweist, der aus dem gleichen Material wie das verbleibende Deckelteil (32) besteht, vorzugsweise aus einem unelastischen starren Material.

4. Portionshalter nach einem der Ansprüche 1 bis 3, **dadurch gekennzeichnet, dass** die Behälter- und Deckelteile (31, 32) jeweils Deckelrückhaltemittel (314, 324) aufweisen, die so ausgebildet sind, dass sie eine von dem Benutzer betätigbare mechanische Halterung des Deckelteils (32) an dem Behälterteil (31) ermöglichen, wobei die Deckelrückhaltemittel (314, 324) nicht neben der Scharnierverbindung der Deckel- und Behälterteile (31, 31, 314, 324) angeordnet sind, wobei die Deckelrückhaltemittel (314, 324) bevorzugt als eine örtlich geprägte Prägung der Innenfläche des Behälterteils (31) operativ ausgerichtet mit einem abgeflachten Außenabschnitt der strömungsbegrenzenden Wand (322) des Deckelteils (32) ausgebildet sind, so dass das Deckelteil (32) in einer geschlossenen Stellung gehalten werden kann und der Deckeldichtungsabschnitt (35) nach unten gegen den Behälterdichtungsabschnitt (34) gedrückt wird.

5. Portionshalter nach einem der vorhergehenden Ansprüche 1 bis 4, **dadurch gekennzeichnet, dass**
die Behälter- und Deckelteile (31, 32) jeweils Behälter- und Deckeldichtungsabschnitte (34, 35) aufweisen, die in einander gegenüberliegenden Bereichen, insbesondere in einem stromabwärts gerichteten Bodenbereich bzw. in einer stromaufwärts gerichteten nach innen verlaufenden Stufe vorgesehen und derart ausgebildet sind, dass der Deckeldichtungsabschnitt (35) unter verschlusstreibendem Druck auf den Behälterdichtungsabschnitt (34) entlang einer durchgehenden Umfangsverlängerung in der geschlossenen Stellung des Portionshalters (3) sitzt, wobei der verschlusstreibende Druck durch mindestens eine der folgenden Bedingungen bereitgestellt werden kann:
- druckbeaufschlagter Eingriff des oberen Bereichs des Deckelteils (32) mit dem Durchflussversorgungsteil (42) der Extraktionsvorrichtung (4);
- druckbeaufschlagtes Einrasten der Deckelhalteeinrichtung (324), entsprechend einer geschlossenen Stellung des Portionshalters (3).

6. Portionshalter nach einem der vorhergehenden Ansprüche 1 bis 5, **dadurch gekennzeichnet, dass** die Behälter- und Deckelteile (31, 32) Deckelrückhaltemittel (314, 324) aufweisen, die so ausgebildet sind, dass sie ein mechanisches Rückhalten des Deckelteils (32) auf dem Behälterteil (31) ermöglichen, indem der Benutzer Druck auf einen Randabschnitt des oberen Bereichs des Deckelteils (32) ausübt, der ausreichend ist, um einen Deckelrückhalteabschnitt (324) an einem Behälterrückhalteabschnitt (314) vorbeizutreiben, wobei die Deckelrückhaltemittel (314, 324) so ausgebildet sind, dass sie ein mechanisches Rückhalten des Deckelteils (32) auf dem Behälterteil (31) auch dann gewährleisten, wenn der Portionshalter (3) nicht durch das Durchflussbereitstellungsteil (42) der Brühvorrichtung eingegriffen wird, vorzugsweise auch erforderlich, dass der Benutzer Druck aufbringt, um das Rückhalten des Deckelteils (32) von dem Behälterteil (31) zu lösen.

7. Portionshalter nach einem der vorhergehenden Ansprüche 1 bis 6, **dadurch gekennzeichnet, dass** die Behälter- und Deckelteile (31, 32) Deckelrückhaltemittel (314, 324) aufweisen, die so ausgebildet sind, dass sie dem nach oben wirkenden hydraulischen Druckaufbau innerhalb des begrenzten Raumes des Portionshalters (3) widerstehen, der mit der Flussspritzung verbunden ist.

8. Portionshalter nach einem der vorhergehenden Ansprüche 1 bis 7, **dadurch gekennzeichnet, dass** die Behälter- und Deckelteile (31, 32) entgegengesetzt zu Verbindungsmitteln (6) angeordnete Haltemittel (314, 324), insbesondere Verbindungshaltemittel (621, 622), aufweisen, die mit den Verbindungsmitteln (6) des Deckelteils (32) mit dem Behälterteil (31) verbunden sind, derart, dass gegeneinander entgegengesetzte mechanische Rückhaltemittel des Deckelteils (32) des Portionshalters (3) vorgesehen sind, wobei die Rückhaltemittel bevorzugt so ausgebildet sind, dass sie gemeinsam betätigt werden können.

9. Portionshalter nach einem der vorhergehenden Ansprüche 1 bis 8, **dadurch gekennzeichnet, dass** die Behälter- und Deckelteile (31, 32) Deckelrückhaltemittel (314, 324) aufweisen, die als lokalisierte Prägung der Innenfläche des Behälterteils (31) ausgebildet sind, die zusammenwirkend mit einem abgeflachten Außenabschnitt der strömungsbegrenzenden Wand (322) des Deckelteils (32) ausgerichtet sind, derart, dass das Deckelteil (32) in einer geschlossenen Stellung gehalten werden kann, wobei ein Deckeldichtungsabschnitt (35) nach unten gegen den Behälterdichtungsabschnitt (34) gedrückt wird.

10. Portionshalter nach einem der vorhergehenden Ansprüche 1 bis 9, **dadurch gekennzeichnet, dass**
der Behälterdichtungsabschnitt (34) und die Rückaltemittel (7) in einem Werkstoff mit ähnlichen elastischen Eigenschaften, vorzugsweise aus demselben Werkstoff oder einem Werkstoff mit ähnlicher Zusammensetzung, vorgesehen sind, der sich durchgehend von den Rückaltemitteln (7) bis zum Behälterdichtungsabschnitt (34) erstreckt,
wobei die Deckelverbindungsmittel (6) und die Rückaltemittel (7) in einem Einzelteil oder Stück zusammen mit den Behälter- und Deckelteilen (31, 32) mittels Zweistoff-Spritzguss vorgesehen sind.

11. Portionshalter nach einem der vorhergehenden Ansprüche 1 bis 10, **dadurch gekennzeichnet, dass**
das Behälterteil (31) eine Seitenwand (311) mit einem stromaufwärts gelegenen Seitenwandabschnitt (3111) und einem stromabgewandten Seitenwandabschnitt (3112) aufweist, die relativ zu dem stromaufwärts gelegenen Seitenwandabschnitt (3111) nach innen und bevorzugt auch relativ zu einem nach außen verlaufenden Abschnitt der Bodenwand (32) vertieft ist, und in dem
das Behälterteil (31) einen Behälterdichtungsabschnitt (34) aufweist, der als eine nach innen verlaufende Umfangsstufe ausgebildet ist, die in einem elastisch verformbaren Material vorgesehen ist, wobei der Behälterdichtungsabschnitt (34) stromaufwärts des stromabgewandten Seitenwandabschnitts (3112) und nach innen des stromaufwärts gelegenen Seitenwandabschnitts (3111) vorgesehen ist.

12. Portionshalter nach einem der vorhergehenden Ansprüche 1 bis 11, **dadurch gekennzeichnet, dass**
das Deckelteil (32) eine kragenartige, strömungsbegrenzende Wand (322) aufweist, die sich seitlich entlang des Umfangsbereichs einer strömungsleitenden Wand (321) erstreckt, wobei das Deckelteil (32) mindestens eine der folgenden Elemente umfasst oder trägt:
- Deckelverbindungsmittel (6; 61, 62), die an einem ersten Umfangsbereich davon angeordnet sind und eine schwenkbare Verbindung mit dem Behälterteil (31) bereitstellen;
- Deckelhaltemittel (324), die auf einem zweiten Umfangsbereich davon, vorzugsweise gegenüber dem ersten Umfangsbereich angeordnet sind;
- Deckeldichtungsabschnitt (35), der sich entlang einer stromabwärts gerichteten Umfangskante erstreckt, die der strömungsleitenden Wand (321) gemeinsam ist.

13. Portionshalter nach einem der vorhergehenden Ansprüche 1 bis 12, **dadurch gekennzeichnet, dass**
die Rückaltemittel (7) als Spritzgussteil vorgesehen sind, das sich durch einen Umfangsübergangsbereich zwischen stromaufwärts befindlichen und stromabwärts befindlichen Seitenwandabschnitten (3111, 3112) erstreckt und dabei mindestens eines der folgenden Merkmale bildet:
- einen Behälterdichtungsabschnitt (34), der sich entlang des Innenumfangs nach innen erstreckt und in dem peripheren Grenzbereich zwischen dem Behälter- und dem Deckelteil (31, 32) für einen Randabschnitt der einzelnen Portion (1) und für einen Deckeldichtungsabschnitt (35) eine Sitzstütze bietet, und
- eine stoffliche Verbindung (61) von Deckelverbindungsmitteln (6), die die Scharnierverbindung des Deckelteils (32) mit dem Behälterteil (31) an einem Umfangsbereich davon herstellen.

14. System zur Zubereitung von Getränken und mit einem Portionshalter (3) nach einem der vorhergehenden Ansprüche 1 bis 13, **dadurch gekennzeichnet, dass** das System ferner eine Getränkezubereitungsapparat (5) umfasst, die die Extraktionsvorrichtung (4) und ein dieser vorgeschaltetes Druckströmungsmittel umfasst, so dass eine druckbeaufschlagte Flüssigkeit in einer vorherrschenden Richtung durch die Extraktionsvorrichtung (4), den Portionshalter (3) und die einzelne Portion (1) innerhalb davon fließen kann.

## Revendications

1. Porte-portion pour recevoir une portion individuelle (1) comprenant un confinement (2) compostable et perméable pour recueillir une quantité donnée d'une substance précurseur de boisson, ledit porte-portion (3) étant adapté de telle sorte qu'il peut se trouver à l'intérieur d'une pièce de réception de portion (41) d'un dispositif d'extraction (4), et comprenant:
- Une partie de récipient (31) avec une paroi latérale (311) et une paroi de base (312) et
- Une partie de couvercle (32) avec une paroi conductrice d'écoulement (321) présentant des passages d'écoulement (33),
Confinant conjointement avec un espace de recueil s'étendant au moins en aval de la région d'interface périphérique entre les parties de récipient et de couvercle (31, 32),
Ladite partie de couvercle (32) étant articulée de façon périphérique à la partie de récipient (31) par des moyens de raccordement de couvercle (6), de sorte qu'elle peut être actionnée jusqu'à une position fermée, à laquelle la portion individuelle (1) est confinée à l'intérieur de l'espace de cavité,
Ladite partie de récipient (31) étant adaptée de telle sorte qu'elle puisse-t-être retenue par des moyens de rétention (7) à l'intérieur de la pièce de réception de portion (41) du dispositif d'extraction (4), qui peut être tenue manuellement et actionnée de façon à être tirée vers une position de fonctionnement engagée avec une partie de fourniture d'écoulement (42) dudit dispositif d'extraction (4), étant que
La partie de récipient (31) présente une partie d'étanchéité de récipient (34) pour assurer l'étanchéité aux liquides du porte-portion (3) en position fermée, ladite partie d'étanchéité de récipient (34) configurée comme une marche périphérique s'étendant vers l'intérieur fournissant une surface d'appui orientée vers l'amont, pour une région de rebord de la portion individuelle (1) et également une surface d'appui pour le bord libre périphérique orienté vers l'aval de la partie de couvercle (32), en particulier configuré comme une partie d'étanchéité du couvercle (35), de telle sorte qu'il soit prévu un engagement d'étanchéité desdites parties d'étanchéité de récipient et de couvercle (34, 35), dans le cas où le porte-portion (3) est fermé et
- Ladite partie de couvercle (32) présente une paroi de confinement d'écoulement (322) en forme de collet s'étendant latéralement en périphérie d'une paroi conductrice d'écoulement (321) s'étendant transversalement à la direction d'écoulement dominante;
Ledit porte-portion étant **caractérisé en ce que**
- Ladite partie de récipient (31) comprend une paroi latérale (311) présentant une partie de paroi latérale en amont (3111) et une partie de paroi latérale en aval (3112), qui supporte des moyens de rétention (7) adaptés pour une rétention ajustée sous pression de ladite partie de récipient (31), à l'intérieur de la pièce de réception de portion (41).

2. Porte-portion selon la revendication 1, **caractérisé en ce que** la partie de couvercle (32) présente une partie d'étanchéité de couvercle (35) disposée sur le bord libre périphérique orienté vers l'aval de la partie de couvercle (32), ladite partie d'étanchéité de couvercle (35) étant configurée pour reposer sous pression sur la partie d'étanchéité de récipient (34), assurant ainsi un engagement d'étanchéité desdites parties d'étanchéité de récipient et de couvercle (34, 35), dans le cas où le porte-portion (3) est fermé.

3. Porte-portion selon la revendication 1 ou 2, **caractérisé en ce que**
La partie de récipient (31) supporte une partie d'étanchéité de récipient (34) pourvue d'un matériau élastiquement déformable, préférentiellement un matériau différent de la partie de récipient (31) et **en ce que**
La partie de couvercle (32) présente une partie d'étanchéité de couvercle (35) pourvue dans le même matériau que la restante partie de couvercle (32), préférentiellement dans un matériau rigide non élastique.

4. Porte-portion selon l'une quelconque des revendications 1 à 3, **caractérisé en ce que** les parties de récipient et de couvercle (31, 32) présentent des moyens de rétention de couvercle (314, 324) respectifs configurés de façon à fournir une rétention mécanique actionnable par l'utilisateur de la partie de couvercle (32) sur la partie de récipient (31), lesdits moyens de rétention de couvercle (314, 324) n'étant pas disposés à côté de la connexion articulée en charnière des parties de couvercle et de récipient (31, 32), les moyens de rétention de couvercle (314, 324) étant préférentiellement configurés comme un gaufrage localisé de la surface interne de la partie de récipient (31) aligné de manière opérationnelle avec une partie extérieure aplatie de la paroi de confinement de l'écoulement (322) de la partie de couvercle (32), de telle sorte que la partie de couvercle (32) puisse-t-être maintenue en position fermée et que la partie d'étanchéité de couvercle (35) soit pressée vers le bas contre la partie d'étanchéité de récipient (34).

5. Porte-portion selon l'une quelconque des revendications précédentes 1 à 4, **caractérisé en ce que**
Les parties de récipient et de couvercle (31, 32) présentent des parties d'étanchéité de récipient et de couvercle (34, 35) respectives qui sont disposées dans des régions mutuellement opposées, en particulier dans une région de base orientée vers l'aval et dans une marche qui s'étend vers l'intérieur orientée vers l'amont, respectivement, et adaptées de telle sorte que la partie d'étanchéité de couvercle (35) repose sous une pression d'entraînement de fermeture sur la partie d'étanchéité de récipient (34), le long d'une extension périphérique continue en position fermée du porte-portion (3), ladite pression d'entraînement de fermeture pouvant être fournie par au moins l'un des éléments suivants:
- Engagement sous pression de la partie supérieure de la partie de couvercle (32) avec la partie de fourniture d'écoulement (42) du dispositif d'extraction (4);
- Enclenchement sous pression des moyens de rétention de couvercle (324) correspondant à une position fermée du porte-portion (3).

6. Porte-portion selon l'une quelconque des revendications précédentes 1 à 5, **caractérisé en ce que** les parties de récipient et de couvercle (31, 32) présentent des moyens de rétention de couvercle (314, 324) configurés de façon à assurer une rétention mécanique de la partie de couvercle (32) sur la partie de récipient (31), au moyen de l'application par l'utilisateur d'une pression sur une région périphérique de la partie supérieure de la partie de couvercle (32), suffisamment pour entraîner une partie de rétention de couvercle (324) au-delà d'une partie de rétention de récipient (314), les moyens de rétention de couvercle (314, 324) étant configurés de façon à assurer une retenue mécanique de la partie de couvercle (32) sur la partie de récipient (31), même dans le cas où le porte-portion (3) n'est pas engagé par la partie de fourniture d'écoulement (42) du dispositif d'infusion, de préférence il faut également demander à l'utilisateur d'appliquer une pression de manière à libérer la retenue de la partie de couvercle (32) de la partie de récipient (31).

7. Porte-portion selon l'une quelconque des revendications précédentes 1 à 6, **caractérisé en ce que** les parties de récipient et de couvercle (31, 32) présentent des moyens de rétention de couvercle (314, 324) configurés de façon à résister à l'accumulation de pression hydraulique agissant vers le haut à l'intérieur de l'espace confiné du porte-portion (3) associé à l'injection par écoulement.

8. Porte-portion selon l'une quelconque des revendications précédentes 1 à 7, **caractérisé en ce que** les parties de récipient et de couvercle (31, 32) présentent des moyens de rétention (314, 324) disposés à l'opposé des moyens de raccordement de couvercle (6), en particulier des moyens de rétention de liaison (621, 622) associés aux moyens de raccordement de couvercle (6) de la partie de couvercle (32) à la partie de récipient (31), de sorte qu'il est prévu des rétentions mécaniques mutuellement opposées de la partie de couvercle (32) du porte-portion (3), lesdites rétentions étant préférentiellement configurées de façon à pouvoir être actionnées conjointement.

9. Porte-portion selon l'une quelconque des revendications précédentes 1 à 8, **caractérisé en ce que** les parties de récipient et de couvercle (31, 32) présentent des moyens de rétention de couvercle (314, 324) configurés comme un gaufrage localisé de la surface interne de la partie de récipient (31) aligné de manière opérationnelle avec une partie extérieure aplatie de la paroi de confinement de l'écoulement (322) de la partie de couvercle (32), de telle sorte que la partie de couvercle (32) puisse-t-être maintenue en position fermée où une partie d'étanchéité du couvercle (35 est pressée vers le bas contre la partie d'étanchéité de récipient (34).

10. Porte-portion selon l'une quelconque des revendications précédentes 1 à 9, **caractérisé en ce que**
La partie d'étanchéité de récipient (34) et les moyens de rétention (7) du support sont prévus dans un matériau ayant des propriétés élastiques similaires, préférentiellement dans un même matériau ou un matériau de composition similaire s'étendant en continu des moyens de rétention (7) jusqu'à la partie d'étanchéité de récipient (34),
Les moyens de raccordement de couvercle (6) et les moyens de rétention (7) du support sont fournis en une seule partie ou pièce avec les parties de récipient et de couvercle (31, 32) au moyen d'un moulage par injection d'une bi-matière.

11. Porte-portion selon l'une quelconque des revendications antérieures 1 à 10, **caractérisé en ce que**
La partie de récipient (31) présente une paroi latérale (311) avec une partie de paroi latérale en amont (3111) et une partie de paroi latérale en aval (3112), qui est encastrée vers l'intérieur par rapport à la partie latérale en amont (3111) et préférentiellement également par rapport à une partie s'étendant vers l'extérieur de la paroi inférieure (32) et **en ce que**
La partie de récipient (31) présente une partie d'étanchéité de récipient (34) configurée comme une marche périphérique s'étendant vers l'intérieur et fournie dans un matériau élastiquement déformable, ladite partie d'étanchéité de récipient (34) étant disposée en amont de la partie de paroi latérale en aval (3112) et vers l'intérieur de la partie de paroi latérale en amont (3111).

12. Porte-portion selon l'une quelconque des revendications antérieures 1 à 11, **caractérisé en ce que**
La partie de couvercle (32) présente une paroi de confinement de l'écoulement (322) en forme de collet s'étendant latéralement le long de la région périphérique d'une paroi conductrice d'écoulement (321), ladite partie de couvercle (32) comprenant ou supportant au moins l'un des éléments suivants:
- Des moyens de raccordement de couvercle (6; 61, 62) disposés sur une première région périphérique de celui-ci et assurant une liaison pivotante avec la partie de récipient (31);
- Des moyens de rétention de couvercle (324) disposés sur une seconde région périphérique de celle-ci, préférentiellement opposée à la première région périphérique;
- Une partie d'étanchéité de couvercle (35) s'étendant le long d'un bord périphérique orienté vers l'aval commun à la paroi conductrice d'écoulement (321).

13. Porte-portion selon l'une quelconque des revendications précédentes 1 à 12, **caractérisé en ce que**
Les moyens de rétention (7) sont prévus sous la forme d'une pièce moulée par injection s'étendant à travers une région de transition périmétrique entre les parties de paroi latérale en amont et en aval (3111, 3112), formant ainsi au moins l'un des éléments suivants:
- Une partie d'étanchéité de récipient (34) s'étendant vers l'intérieur le long du périmètre intérieur et qui fournit un support d'assise, dans la région d'interface périphérique entre le récipient et les parties de couvercle (31, 32), pour une partie de rebord de la portion individuelle (1) et pour une partie d'étanchéité de couvercle (35) et
- Une liaison matérielle (61) de moyens de raccordement de couvercle (6), qui assurent la connexion articulée en charnière de la partie de couvercle (32) avec la partie de récipient (31) dans une région périphérique de celle-ci.

14. Système de préparation de boissons et comprenant un porte-portion (3) selon l'une quelconque des revendications précédentes 1 à 13, **caractérisé en ce que** ledit système comprend en outre un appareil de préparation de boissons (5) comprenant ledit dispositif d'extraction (4) et des moyens d'écoulement sous pression en amont de celui-ci, de sorte qu'un fluide sous pression puisse s'écouler dans une direction dominante à travers ledit dispositif d'extraction (4), le porte-portion (3) et la portion individuelle (1) à l'intérieur de celui-ci.
